Europäisches Patentamt

European Patent Office

Office européen des brevets

(11) Veröffentlichungsnummer: **0 242 631**
**A2**

(12) EUROPÄISCHE PATENTANMELDUNG

(21) Anmeldenummer: **87104509.2**

(22) Anmeldetag: **26.03.87**

(51) Int. Cl.4: **G01D 7/00**

(30) Priorität: **27.03.86 US 845210**

(43) Veröffentlichungstag der Anmeldung:
**28.10.87 Patentblatt 87/44**

(84) Benannte Vertragsstaaten:
**DE FR GB**

(71) Anmelder: **Siemens Aktiengesellschaft Berlin und München**
**Wittelsbacherplatz 2**
**D-8000 München 2(DE)**

(72) Erfinder: **Devinney, Edward J., Dr.**
**100 Union Avenue**
**Delanco, NJ 08705(US)**

(54) **Analog anzeigendes Messinstrument mit zweifarbig lichtemittierenden Dioden.**

(57) In einer Anzeigeanordnung wird das Ausgangssignal von zweifarbig lichtemittierenden Dioden (DLED's) zur Verwendung in einer farbigen Skala in eine quantitative Information umgesetzt. Eine Schaltungsanordnung (43, 44, 46) liefert ein periodisches Ausgangssignal, das in der Lage ist, das farbige Licht-Ausgangssignal der DLED (51) zum Betrieb in einer Dauer-Betriebsweise oder in einer Blink-Betriebsweise zu variieren. Die Blink-Betriebsweise wird benutzt, um entweder eine Hilfsfunktion auszuführen oder um einen "Außer-Bereich"-Zustand anzuzeigen.

FIG 3

EP 0 242 631 A2

## Analog anzeigendes Meßinstrument mit zweifarbig lichtemittierenden Dioden

Die vorliegende Erfindung bezieht sich auf Anzeigeeinrichtungen und elektrische Meßinstrumente, insbesondere auf die Verwendung von mehrfarbig lichtemittierenden Dioden (LEDs) in einer Weise, durch die eine akkurate quantitative Information zur Verfügung gestellt wird.

Eine mehrfarbig lichtemittierende Diode oder LED, nämlich eine Doppel-LED (DLED) ist in der Lage, eine Vielzahl von deutlich unterscheidbaren Farben anzuzeigen, wobei die Auswahl einer Farbe durch elektrische Signale vorgenommen werden kann, die den Anschlüssen der DLED zugeführt werden. Im Prinzip könnte eine derartige Einrichtung, nämlich eine DLED-Anzeigeeinrichtung, quantitative Information in solchen Fällen anzeigen, in denen quantitative Werte durch das menschliche Auge als deutlich unterscheidbare Farben wahrgenommen werden können.

Eine grundsätzliche Schwierigkeit bei der Wahrnehmung des quantitativen Wertes, der angezeigt wird, ist das Fehlen eines geeigneten Schemas zum Inbezugsetzen der angezeigten Farbe mit der physikalischen Größe, die zu messen ist. Eine weitere Schwierigkeit besteht darin, daß die Farbwahrnehmung des menschlichen Auges individuell unterschiedlich ist. Im allgemeinen ist bekannt, daß die Farbaufnahmefähigkeit besser bei weiblichen Personen als bei männlichen Personen ausgeprägt ist. Im allgemeinen sind nur männliche Personen mit Farbblindheit behaftet, wobei auch unterschiedliche Grade von Farbblindheit auftreten können. Insbesondere wird ein wirksames Schema benötigt, das an die Aufnahmefähigkeiten des menschlichen Auges angepaßt ist, um die physikalische Größe, die gemessen wird, aus der angezeigten Farbe "herauslesen" zu können.

Der vorliegenden Erfindung liegt die Aufgabe zugrunde, ein Meßinstrument der eingangs genannten Art mit einem Schema zu schaffen, das den Eindruck eines Meßinstruments einer angezeigten DLED-Farbe zuordnet, welche ein Meßergebnis der zu erfassenden Größe angibt. Insbesondere besteht die Aufgabe für die vorliegende Erfindung darin, eine Meßanzeige oder eine Skala zu Vergleichszwecken zu schaffen, die nicht von einer derartigen individuellen Unterschiedlichkeit in der Farbaufnahmefähigkeit abhängt. Desweiteren besteht die Aufgabe für die vorliegende Erfindung darin, eine Schaltungsanordnung für ein Blinkverfahren in bezug auf eine Farbe der anzeigenden DLED-Einrichtung zu schaffen, um eine "Außerhalb-des-Bereichs"-Anzeige für eine erfaßte Größe zu bewirken. Außerdem besteht die Aufgabe für die vorliegende Erfindung darin, eine Schaltungsanordnung für ein Blink-Verfahren in Verbindung mit beliebigen/allen Farben zu verwenden, um eine "Warnungs"-Anzeige für eine erfaßte Größe zu bewirken. Desweiteren liegt der vorliegenden Erfindung die Aufgabe zugrunde, das Blinken mit ausgewählten Sätzen von Farben kombinieren zu können, um weitere Information über Dimensionen der erfaßten Größe (n) anzeigen zu können. Schließlich liegt der vorliegenden Erfindung die Aufgabe zugrunde, ein Mittel zu schaffen, das eine quantitative Mengeninformation ohne Kenntnis von Ziffern usw. vermittelt.

Allgemein ausgedrückt sieht die Erfindung eine Anordnung zum Umsetzen eines Analogsignals, welches kennzeichnend für einen physikalischen Parameter ist, in ein farbiges Lichtausgangssignal, welches einer farbig segmentierten Skala zugeordnet ist, vor. Die Anordnung setzt daher ein farbiges Lichtsignal mit einem normal hohen subjektiven Wert in einen skalaren quantitativen Wert um. Die radiale Anordnung der segmentierten Skala schafft eine Grundlage für einen Vergleich zwischen dem analogen Farbausgangssignal und dem skalaren quantitativen Wert.

In einem ersten gezeigten und beschriebenen Ausführungsbeispiel setzt ein Wandler das analoge Signal in einen digitalen Wert um. Ein Prozessor nimmt das digitale Eingangssignal auf und vergleicht es mit einer Tabelle von gespeicherten Werten, um ein periodisches Ausgangssignal zum Treiben einer zweifarbig lichtemittierenden Diode zu erzeugen.

In einem zweiten Ausführungsbeispiel sind in ein zweiter Eingangskanal und ein zweiter Ausgangskanal mit einer zweiten lichtemittierenden Diode vorgesehen. Durch selektives Steuern der Sequenz von periodischen Ausgangssignalen erzeugt der Prozessor unterschiedliche Ausgangseffekte. Mit einem Ausgangssignal arbeitet die DLED in einem Blinkbetrieb. Mit einem zweiten Ausgangssignal arbeiten zwei DLED's abwechseind in einem Blinkbetrieb, um eine sehr gut erkennbare Vergleichsdarstellung zwischen zwei subjektiven Werten bewirken zu können.

Die Merkmale der Erfindung und weitere Aufgaben und Vorteile werden aus der im folgenden anhand mehrerer Figuren im einzelnen gegebenen Beschreibung ersichtlich.

FIG 1 zeigt eine Skala, die farbige Segmente und eine DLED gemäß der vorliegenden Erfindung enthält.

FIG 2 zeigt eine weitere Skala zur Verwendung als Kraftstoffmeter gemäß der vorliegenden Erfindung.

FIG 3 zeigt ein erstes, die Erfindung verdeutlichendes Ausführungsbeispiel einer Schaltungsanordnung zum Betrieb einer DLED gemäß der vorliegenden Erfindung.

FIG 4 zeigt ein periodisches Ausgangssignal, das durch das Ausführungsbeispiel gemäß FIG 3 erzeugt wird.

FIG 5 zeigt ein zweites, die Erfindung verdeutlichendes Ausführungsbeispiel, in dem ein weiterer Eingangskanal und ein zweiter Ausgangskanal zum Bewirken einer Vergleichsdarstellung zwischen zwei DLED's vorgesehen sind.

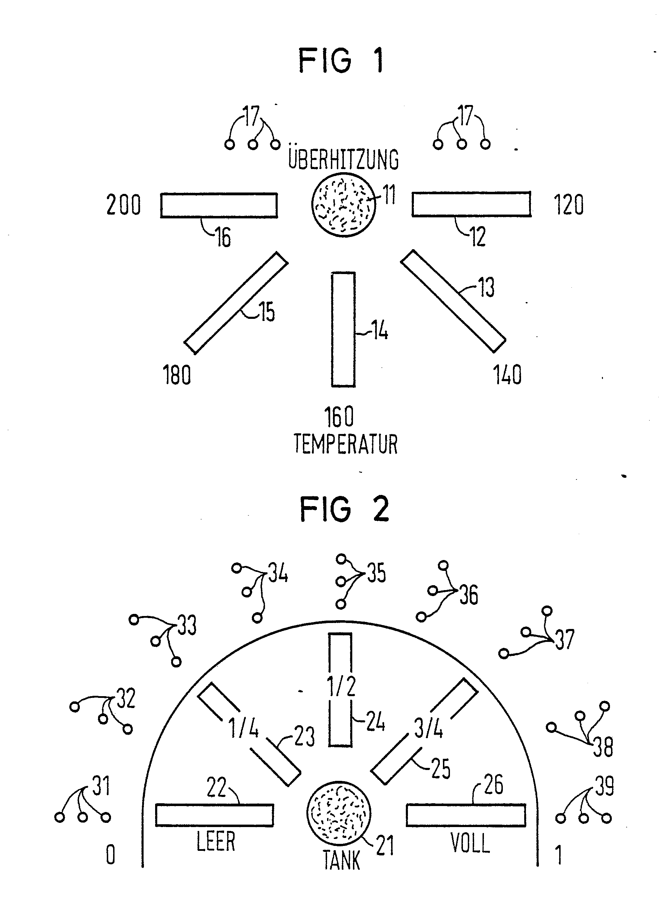

FIG 1 zeigt ein erstes, die Erfindung verdeutlichendes Ausführungsbeispiel für ein analog anzeigendes Meßinstrument gemäß der vorliegenden Erfindung. Die Anzeigeeinrichtung gemäß FIG 1 stellt eine meßinstrumentähnliche quantitative Information für eine typische Analogfunktion zur Verfügung. Die Analogfunktion in diesem Beispiel ist herkömmlicherweise in der Automobiltechnik vorzufinden und dient beispielsweise als Temperaturanzeige für den Motor eines Fahrzeugs. Die quantitative Information wird visuell vermittelt und ist durch Anpassen der Ausgabe einer Lichtfarbe einer DLED 11, um dadurch eine Vielzahl eines Satzes von radial angeordneten farbigen Segmenten 12-16 zu erleuchten, wahrnehmbar. Jedes der Segmente 12-16 stellt eine unterschiedliche Farbe in einem Bereich der Farben dar, die mit dem farbigen Lichtausgangssignalspektrum der DLED 11 korrespondieren.

Die visuelle Wahrnehmung oder Aufnahme einer Meßanzeige versetzt eine Person in die Lage, schnell den relativen Ort eines speziellen farbigen Ausgangssignals der DLED 11 in Beziehung mit dem Ausgangssignalspektrum über alles zu erkennen. Desweiteren verbessert die seitliche Anordnung der in radialer Richtung vorgesehenen farbigen Segmente 12-16, wobei das Segment 12 grün und das Segment 16 rot, die Meßwertwahrnehmung. Jedenfalls ist die radiale Anordnung der farbigen Segmente wirksam zum Verbessern eines schnellen Zuordnens des richtigen aus einer Vielzahl der Segmente 12-16.

Aus FIG 1 ist ersichtlich, daß im Falle eines Fahrzeugs, welches mit einem derartigen Instrument ausgestattet ist, das dem Fahrer Meßwerte anzeigt, dieser mit Trend-Information versorgt wird. Dies bedeutet beispielsweise, daß wenn die Temperatur des Motors des Fahrzeugs ansteigt, dieses Instrument die Möglichkeit des Kochens des Kühlwassers voranzeigt, während ein einfaches Ein/Aus-Licht-oder Warnlicht die Situation nur anzeigt, wenn das Problem bereits aufgetreten ist. Experimente zeigen, daß eine typische Person die Information zwischen den fünf Seg menten 12-16 gemäß FIG 1 interpolieren kann. Das bedeutet, daß eine derartige Anordnung es ermöglicht, Temperaturänderungen in fünf Stufen anzugeben, was völlig ausreichend ist, um Motorkühlprobleme zu erkennen, und dies weit besser als mittels einer einfachen Ein/Aus-Lampe, und zwar bei niedrigem Kostenaufwand.

Mit der Anordnung gemäß FIG 1 wird eine "Außer-Bereich"-Situation (Überhitzung) schnell durch eine blinkende Rotanzeige angezeigt, die durch einen punktiert dargestellten roten Streifen 17 vorgesehen ist. Daher ist die Anzeigeeinrichtung gemäß FIG 1 in der Lage, sowohl eine Trendinformation als auch einen "Außer-Bereich"-Zustand anzuzeigen.

FIG 2 zeigt eine ähnliche Anzeigeeinrichtung für einen unterschiedlichen Anwendungsfall, im vorliegenden Falle für einen Kraftstoffüllstandsanzeiger für ein Fahrzeug. Die Anzeigeeinrichtung gemäß FIG 2 besteht aus einer DLED 21 und radial angeordneten farbigen Segmenten 22-26, die von dem Segment 22 zum Anzeigen des Zustands "LEER" bis zu dem Segment 26 zum Anzeigen des Zustands "VOLL" reichen. Zusätzlich enthält die Anzeigeeinrichtung einen punktiert dargestellten farbigen Ring mit Lichtpunkten 31-39. Der punktiert dargestellte farbige Ring zeigt im vorliegenden Fall eine Hilfsfunktion an. Immer dann, wenn die DLED 21 blinkt, ist die äußere Skala abzulesen. Die äußere Skala dient als eine Hilfsskala, um die Auflösung der Anzeigeeinrichtung für kleine Mengen von Kraftstoff (z. B. weniger als 4 Liter) zu erhöhen. Wenn angenommen wird, daß zehn Farben ausreichend gut durch eine Person unterscheidbar sind, beispielsweise während des Auftretens eines Blinkzustandes, der mit einer Kraftstoffmenge von ca. 4 Liter, die in dem Kraftstofftank des Fahrzeugs verblieben ist, korrespondiert, würde ein Wechsel der Farbe von rot nach grün einen Bereich von zehn Zuständen abdecken, was eine Auflösung korrespondierend mit einem Zehntel von ca. 4 Litern Kraftstoff schafft. Mit einer Kraftstofftankkapazität von ca. 40 Litern beträgt dann die Auflösung 1 %, was einer ausreichenden quanti tativen Information entspricht.

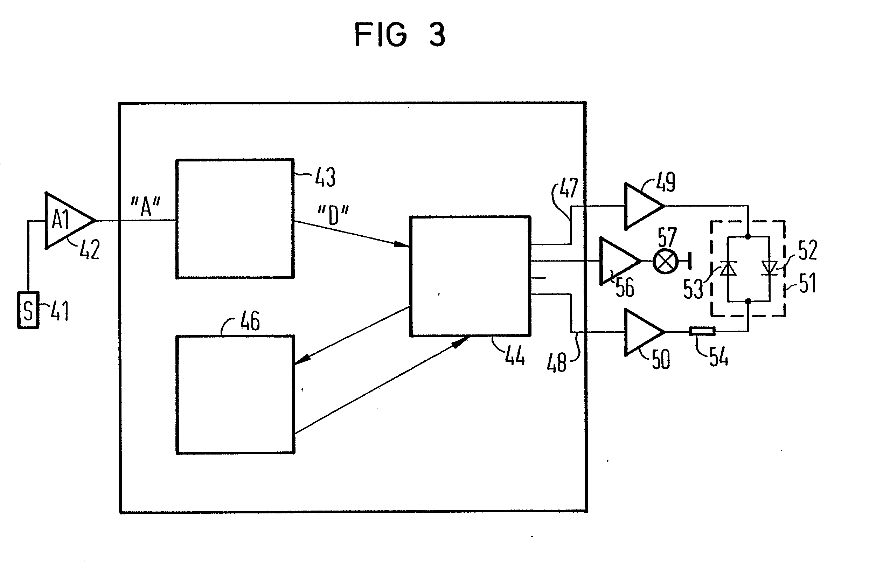

FIG 3 zeigt ein Prinzipschaltbild einer Schaltungsanordnung zum Umsetzen von analogen Daten aus einem Sensor und zum Übersetzen des Werts des Ausgangssignals des Sensors in ein Treibersignal für eine zweifarbig (ROT/GRÜN) lichtemittierende Diode. Grundsätzlich setzt die Schaltungsanordnung gemäß FIG 3 einen analogen Signalwert in ein Signal mit Impulsform mit zwei Polaritäten um, wobei der Abschnitt einer Polarität relativ zu der anderen Polarität auf einer Zeitbasis die relative Lichtstärke bestimmt, die von der individuellen LED ausgesendet wird. Das Verhältnis des Lichts, das durch eine LED erzeugt wird, in bezug auf das von der anderen LED erzeugte Licht ergibt eine bestimmte Farbe des auszusendenden Lichts.

In der Schaltungsanordnung gemäß FIG 3 wird das analoge Ausgangssignal eines Sensors 41 durch einen Verstärker 42 verstärkt. Der Sensor 41 erzeugt ein einen Ausgangswert repräsentierendes Signal, dessen Amplitude kennzeichnend für einen physikalischen Parameter ist. Typischerweise sind diese Parameter eine Temperatur oder der Pegel einer Flüssigkeit in einem Vorratsbehälter. Selbstverständlich gibt es zahlreiche weitere Parameter, die zu messen oder in ein analoges Signal umzusetzen sind, und es ist ersichtlich, daß der Sensor 41 leicht anpaßbar ist, um diese Parameter in geeignete analoge Signale umzusetzen. Desweiteren ist vorgesehen, daß der Sensor 41 durch unterschiedliche herkömmliche Wandler, die aus dem Stand der Technik bekannt sind, realisiert werden kann.

Das Ausgangssignal des Verstärkers 42 wird einem A/D-Wandler 43 zum Umsetzen in eine geeignete digitale Größe zugeführt. Dieses digitale Signal wird an einen Mikroprozessor 44 geliefert. Der Mikroprozessor 44 benutzt den digitalen Wert als einen Zeiger zum Zugreifen auf einen entsprechenden Speicherplatz in einer Nachschlage-Tabelle 46. Der Inhalt dieses Speicherplatzes wird ausgelesen, um ein zweites Eingangssignal für den Mikroprozessor 44 zu erzeugen. Dieses zweite Eingangssignal dient als Zählstand eines Zählers, der das Verhältnis von Grünzeit zu Rotzeit für eine DLED 51 steuert.

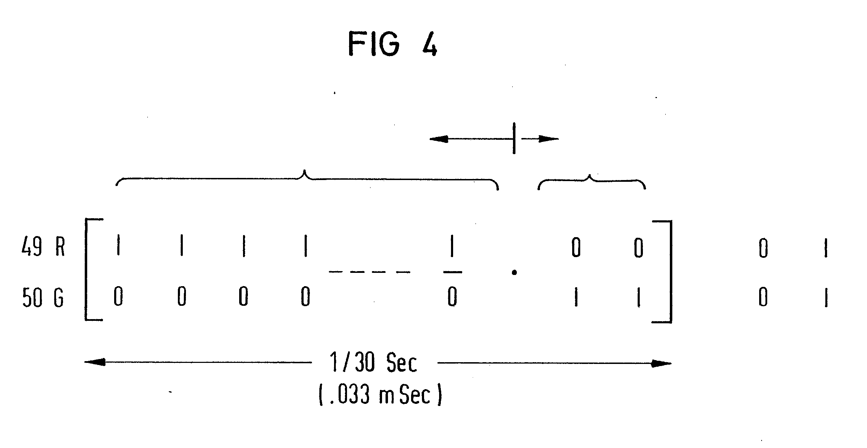

Das Steuersignal ist in FIG 4 gezeigt, in der ein Segment mit einer Anzahl von sich wiederholenden Zyklen dargestellt ist. Jeder Zyklus ist nominell in einen ersten Status oder einen Ausgangpegel und einen zweiten Status oder einen Null-Ausgangssignalpegel unterteilt. Diese Steuersignale liegen an Leitungen 47 und 48, die mit Eingängen von Verstärkern 49 und 50 verbunden sind, an. Die Ausgänge der Verstärker 49 und 50 liefern ein bipolares Signal. Die Impulsform dieser Signale kann bezogen auf Erdpotential dargestellt werden. Der positive Teil des Signals aus dem Verstärker 49 spannt eine Diode 52 in Vorwärtsrichtung vor, während der positive Abschnitt aus dem Verstärker eine Diode 53 in Vorwärtsrichtung vorspannt. Die Diode 52 erzeugt ein ROT-Ausgangssignal, während ein GRÜN-Ausgangssignal von der Diode 53 abgegeben wird. Ein geeigneter Lastwiderstand ist in Reihe mit der DLED 51 geschaltet, um einen Stromfluß innerhalb eines geeigneten Bereiches zu erzeugen.

Der Mikroprozessor 44 steuert das Farb-Ausgangssignal der DLED 51 durch die relative Zeit, über die ein "1"-Pegel-Ausgangssignal im Verhältnis zu einem "0"-Pegel-Ausgangssignal innerhalb jedes Zyklus vorliegt. In dem vorliegenden Falle wird die Farbe ROT durch den "1"-Pegel erzeugt, während die Farbe GRÜN durch den "0"-

Pegel erzeugt wird. Es sei angemerkt, daß eine wichtige Funktion der Nachschlage-Tabelle 46 darin besteht, eine Reihe von Werten zu erzeugen, die eine Farbanzeige an dem Ausgang der DLED 51 in bezug auf einen physikalischen Wert, einen gemessenen Parameter usw. liefert. Eine derartige Verteilung von bestimmten wahrzunehmenden Farben erfolgt gleichförmig über den Bereich der pyhsikalischen Variablen, die gemessen werden. Dementsprechend ist die Möglichkeit, daß Farbänderungen über einen kleinen Abschnitt des Bereichs der physikalischen Variablen hinweg auftreten, eliminiert.

Ein weiteres Merkmal dieser Anordnung besteht darin, daß die Nachschlage-Tabelle 46 ebenfalls dazu verwendet werden kann, eine "Betriebslinearisierung" zu bewirken. Beispielsweise kann ein Fahrzeug-Kraftstofftank aufgrund konstruktiver Voraussetzungen ungleichförmig ausgebildet sein. Dabei kann ein Flüssigkeitsstand, den ein Sensor erfassen soll, nur in einer komplizierten Art und Weise auf die Menge des tatsächlich vorhandenen Kraftstoffs bezogen werden. Die Nachschlage-Tabelle 46 kann leicht dahingehend angepaßt werden, daß sie einen gleichmäßigen Farbübergang erzeugt, der für die Menge des verbrauchten Kraftstoffs kennzeichnend ist.

In FIG 3 ist mit dem Bezugzeichen 56 ein weiterer Verstärker und mit dem Bezugzeichen 57 eine Kontroll-Lampe oder -LED bezeichnet.

FIG 4 zeigt, daß die Schaltungsanordnung ein Signalformat vorsieht, daß leicht an eine sog. Blinkfunktion anpaßbar ist.

Es sei angemerkt, daß die Dauer der Periode 0.033 ms beträgt, um ein Flackern zu verhindern. Innerhalb einer jeder Periode tritt eine Vielzahl von aufeinanderfolgenden Ausgangssignalen auf. Wenn die Leitung 47 auf einem "1"-Pegel und die Leitung 48 auf einem "0"-Pegel liegt, wird durch die Diode 52 in FIG 3 ein ROT-Ausgangssignal erzeugt. Umgekehrt wird, wenn ein "0"-Pegel an der Leitung 47 und ein "1"-Pegel an der Leitung 48 liegt, ein GRÜN-Ausgangssignal durch Aufsteuern der Diode 53 erzeugt.

Wenn die beiden Leitungen 47, 48 auf gleichem Potential liegen, emittiert die Diode DLED 51 kein Licht. Auf diese Weise wird ein Blinken durch das Wechseln zwischen Perioden bewirkt, in denen die Diode DLED 51 Licht emittiert, und Perioden, in denen die Diode DLED 51 kein Licht emittiert.

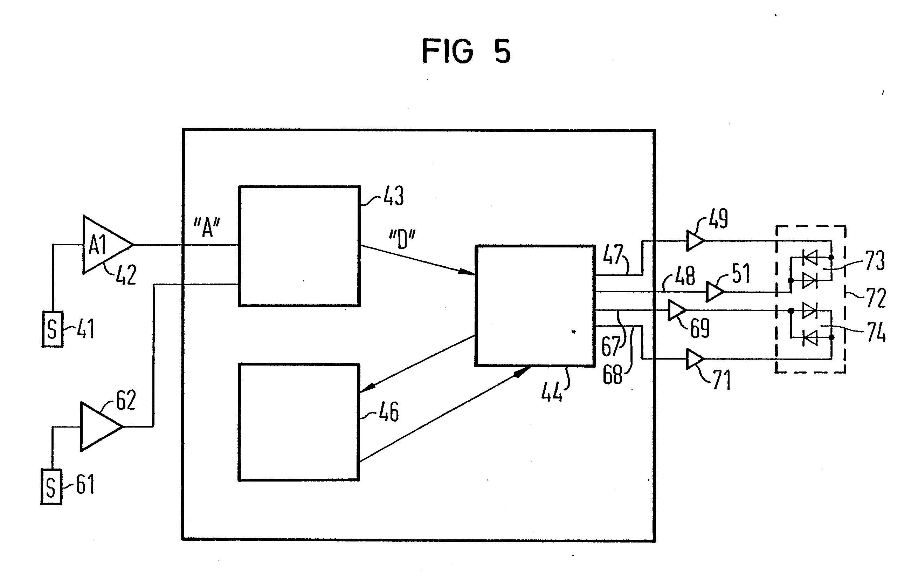

FIG 5 zeigt ein weiteres, die Erfindung verdeutlichendes Ausführungsbeispiel, wobei gleiche Bezugzeichen korrespondierende Elemente und Komponenten bezeichnen. In diesem Ausführungsbeispiel ist zusätzlich ein weiterer Sensor 61 und ein weiterer Eingangsverstärker 62 vorgesehen, welche Elemente einen weiteren Eingangskanal für den A/D-Wandler 43 darstellen. Diesem weiteren Eingangskanal ist ein zweiter Ausgangskanal zugeordnet. Der Ausgangskanal besteht aus Ausgabeleitungen 67, 68, Verstärkern 69, 71 und einer zweiten lichtemittierenden Diode DLED 74, die zusammen mit einer ersten lichtemittierenden Diode DLED 73 eine Diodeneinheit 72 bilden. In dieser Anordnung wechselt der Mikroprozessor 44 zwischen den ersten und zweiten Ausgangskanälen, wobei die aufeinanderfolgenden Perioden eine "Doppelflackersequenz" bewirken. In der "Doppelflackersequenz" blinkt die Diode DLED 73 abwechselnd mit der Diode DLED 74. Daher bewirkt diese Anordnung ein abwechselndes Blinken zwischen den Dioden DLED 73 und 74, was im Effekt nur dann visuell nichtwahrnehmbar ist, wenn deren Lichtausgangssignale eine Korrespondenz in der Farbabgabe ergeben. Dieses Merkmal des Betriebs schafft eine extrem gut wahrnehmbare Messungs-oder Vergleichstechnik.

Mit dem Vorstehenden wurden neuartige DLED-Anzeigevorrichtungen und die dazugehörige Schaltkreistechniken gezeigt und beschrieben, welche alle der genannten Aufgaben erfüllen und die gewünschten Vorteile bieten. Wie offensichtlich ist, können zahlreiche Modifikationen, Variationen und andere Anwendungsfälle für die vorliegende Erfindung realisiert werden, ohne daß dazu der allgemeine Erfindungsgedanke oder der Schutzumfang, wie er durch die Patentansprüche bestimmt ist, verlassen werden müßte. Bezugszeichenliste

Bezugszeichenliste

21 farbige Segmente
22 farbige Segmente
23 farbige Segmente
24 farbige Segmente
25 farbige Segmente
26 farbige Segmente

31 Lichtpunkte
32 Lichtpunkte
33 Lichtpunkte
34 Lichtpunkte
35 Lichtpunkte
36 Lichtpunkte
37 Lichtpunkte
38 Lichtpunkte
39 Lichtpunkte

11 DLED
12 farbige Segmente
13 farbige Segmente
14 farbige Segmente
15 farbige Segmente
16 farbige Segmente

17 roter Streifen

41 Sensor
42 Verstärker
43 A/D-Wandler
44 Mikroprozessor

46 Nachschlagetabelle
47 Leitung
48 Leitung
49 Verstärker
50 Verstärker
51 DLED
52 Diode
53 Diode
54 Lastwiderstand

56 weiterer Verstärker
57 Kontroll-Lampe oder -LED

61 weiterer Sensor
62 Eingangsverstärker

67 Ausgabeleitung,
68 Ausgabeleitung
69 Verstärker

71 Verstärker
72 Diodeneinheit
73 DLED
DLED

**Ansprüche**

1. Anzeigeanordnung, die auf einen Spannungspegel anspricht, **gekennzeichnet** durch
-eine Quelle (51), die auf einen Spannungspegel reagiert, zum Erzeugen eines farbigen Lichts, dessen Farbe sich entsprechend dem Spannungspegel über ein vorbestimmtes Spektrum ändert, und
-eine Skala (12...16; 22...26), die räumlich um die Quelle (51) herum angeordnet ist, wobei die Skala aus einer Vielzahl von farbigen Segmenten (12...16; 22...26) besteht, die jeweils eine bestimmte Farbe innerhalb des vorbestimmten Spektrums haben, um eine segmentierte Skala zu bilden, in welcher die räumliche Position eines bestimmten Segments in der Skala mit dem Ort seiner bestimmten Farbe entsprechend der Frequenz in dem Frequenzband, das durch das vorbestimmte Spektrum bestimmt ist, korrespondiert, so daß die Farbe des Farblicht-Ausgangssignals der Quelle (51) mit der Farbe des betreffenden der farbigen Segmente in der segmentierten Skala korrespondiert.

2. Elektriches Meßinstrument zum Messen von Spannungspegeln innerhalb eines vorbestimmten Bereiches, **gekennzeichnet** durch

-eine Farblichtquelle (51) zum Erzeugen von Farblicht-Ausgangssignalen, deren Farbe durch den Spannungspegel bestimmt wird, der dieser zugeführt wird, und wobei das Ausmaß der Änderung der Farbe ein Farbspektrum definiert, das ein korrespondierendes Frequenzspektrum hat, und

-eine Skala, die aus einer Vielzahl von Segmenten (12...16; 22...26) besteht, welche räumlich um die Farblichtquelle (51) herum angeordnet sind, wobei jedes Segment (12...16; 22...26) eine bestimmte Farbe innerhalb des Farbspektrums hat, wobei die Vielzahl der Segmente (12...16; 22...26) eine farbige Skala bildet und der relative Ort jedes Segments unter den anderen Segmenten mit dem relativen Frequenzwert seiner Farbe innerhalb des Frequenzspektrums korrespondiert.

3. Elektrisches Meßinstrument nach Anspruch 2, **gekennzeichnet** durch einen Sensor (41) zum Erzeugen eines analogen Spannungssignals, das einen physikalischen Parameter kennzeichnet und dadurch, daß ein A/D-Wandler (43) und eine Verarbeitungseinrichtung (44, 46) vorgesehen sind, die miteinander in Reihe geschaltet sind, um ein Ausgangssignal zu erzeugen, wobei der A/D-Wandler (43) den Spannungspegel in einen digitalen Wert für die Verarbeitungseinrichtung (44, 46) umsetzt und die Verarbeitungseinrichtung (44, 46) ein periodisches, fortlaufendes Ausgangssignal erzeugt, wobei jede Periode kennzeichnend für eine bestimmte Farbe des Lichts ist.

4. Elektrisches Meßinstrument nach Anspruch 3, dadurch **gekennzeichnet**, daß die Verarbeitungseinrichtung (44, 46) eine Nachschlagetabelle (46) für Vergleichswerte für die Verarbeitungseinrichtung enthält, wobei die Verarbeitungseinrichtung ihre digitalen Eingangssignale mit den Vergleichswerten zum Erzeugen ihres periodischen Ausgangssignals vergleicht.

5. Elektrisches Meßinstrument nach Anspruch 4, dadurch **gekennzeichnet**, daß die Verarbeitungseinrichtung (44, 46) das periodische Ausgangssignal mit Perioden ändert, die nicht geeignet sind, ein Lichtausgangssignal zu erzeugen.

6. Elektrisches Meßinstrument nach Anspruch 5, dadurch **gekennzeichnet**, daß eine zweifarbig lichtemittierende Diode (51) vorgesehen ist, die mit dem Ausgang der Verarbeitungseinrichtung (44, 46) verbunden ist, wobei die zweifarbig lichtemittierende Diode (51) abwechselnd zwischen einem AUS-und einem EIN-Zustand in Reaktion auf abwechselnde Perioden wechselt, um eine Blinkfunktion auszuführen.

7. Elektrisches Meßinstrument nach Anspruch 6, dadurch **gekennzeichnet**, daß ein zweiter Eingangskanal und ein zweiter Ausgangskanal, denen eine zweite zweifarbig lichtemittierenden Diode (74) zugeordnet ist, vorgesehen sind, wo bei die Verarbeitungseinrichtung (44, 46) abwechselnd Ausgangssignale für den ersten Ausgangskanal und den zweiten Ausgangskanal erzeugt, um einen "Blink-Vergleich" zwischen der ersten (73) und der zweiten (74) zweifarbig lichtemittierenden Diode zu ermöglichen.

8. Spannungspegel-Anzeigeeinrichtung, die auf einen Eingangsspannungspegel anspricht, **gekennzeichnet** durch

-einen Wandler, der angeordnet ist, um den Eingangsspannungspegel aufzunehmen, zum Erzeugen eines farbigen Lichts, das eine bestimmte Farbe hat, und zwar in Übereinstimmung mit dem Wert des Eingangsspannungspegels, und

-eine Skala, die in Nachbarschaft des Wandlers angeordnet ist, zum Umsetzen der Farbe des farbigen Lichtausgangssignals in quantitative Positionsinformation, die kennzeichnend für den Wert des Eingangsspannungspegels ist, wobei die Skala eine farbige Skala einer Vielzahl von Segmenten (12...16; 22...26) darstellt, wovon jedes eine bestimmte Farbe hat, die sich in gleicher Weise mit dem farbigen Bereich des farbigen Lichts des Wandlers fortsetzt, wobei eine Übereinstimmung zwischen der bestimmten Farbe des Lichts und der Farbe eines aus der Vielzahl der Segmente (12...16; 22...26) die quantitative Positionsinformation ergibt. Zusammenfassung

# FIG 1

ÜBERHITZUNG

17    11    17

200    16    12    120

15    14    13

180    160    140
TEMPERATUR

# FIG 2

34    35    36

33    37

32    1/4   1/2   3/4    38
      23    24    25

31    22          26    39
      LEER  TANK  VOLL
                  21
0                       1

# FIG 3

0 242 631

# FIG 4

49 R, 50 G — 1/30 Sec (.033 m Sec)

# FIG 5

0 242 631